(19) Europäisches Patentamt
European Patent Office
Office européen des brevets

(11) **EP 4 361 924 A1**

(12) **EUROPEAN PATENT APPLICATION**

(43) Date of publication:
**01.05.2024 Bulletin 2024/18**

(21) Application number: **23186965.2**

(22) Date of filing: **21.07.2023**

(51) International Patent Classification (IPC):
**G06Q 10/087** (2023.01)   **G06Q 30/0601** (2023.01)

(52) Cooperative Patent Classification (CPC):
**G06Q 30/0639; G06Q 10/087; G06Q 30/0643**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **25.10.2022   JP 2022170859**

(71) Applicant: **Fujitsu Limited**
**Kawasaki-shi, Kanagawa 211-8588 (JP)**

(72) Inventors:
• **YAMAZAKI, Takashi**
  **Kawasaki-shi, Kanagawa 211-8588 (JP)**
• **OISHI, Yusuke**
  **Kawasaki-shi, Kanagawa 211-8588 (JP)**

(74) Representative: **Hoffmann Eitle**
**Patent- und Rechtsanwälte PartmbB**
**Arabellastraße 30**
**81925 München (DE)**

(54) **MERCHANDISE PURCHASE SUPPORT PROGRAM, INFORMATION PROCESSING APPARATUS, AND MERCHANDISE PURCHASE SUPPORT METHOD**

(57)   A merchandise purchase support program that causes at least one computer to execute a process, the process includes obtaining pieces of position information of each of a plurality of users; when there is an inquiry about an arrangement position of certain merchandise from a user of the plurality of users, specifying a first position where the user has performed a certain action indicating a feature of searching for the arrangement position of the certain merchandise, based on the piece of position information obtained in certain time before execution of the inquiry among the pieces of position information of the user; and determining a second position near the specified first position as a candidate for a new arrangement position of the certain merchandise.

FIG. 1

EP 4 361 924 A1

**Description**

FIELD

The embodiments discussed herein are related to a merchandise purchase support program, an information processing apparatus, and a merchandise purchase support method.

BACKGROUND

In a retail store such as a supermarket or a department store (hereinafter, also simply referred to as retail store), for example, an arrangement location (hereinafter, also referred to as layout) of each of pieces of merchandise is changed depending on a sales status or the like of the each piece of merchandise. In the retail store as described above, for example, this allows a user to find each piece of merchandise more easily, and may improve the sales status or the like of each piece of merchandise.

Japanese Laid-open Patent Publication Nos. 2021-015508 and 2005-031963 are disclosed as related art.

SUMMARY

[TECHNICAL PROBLEMS]

There is a case where the change of the layout as described above is performed depending on, for example, experience or intuition of a store clerk of the retail store (hereinafter, also simply referred to as store clerk), and a sufficient effect may not be achieved in some cases. For example, a layout that allows the user to find each piece of merchandise more easily is thus desired in the retail store as described above.

Accordingly, in one aspect, an object of the present disclosure is to provide a merchandise purchase support program, an information processing apparatus, and a merchandise purchase support method that allow a user to find each piece of merchandise more easily.

[SOLUTION TO PROBLEM]

According to an aspect of the embodiments, a merchandise purchase support program that causes at least one computer to execute a process, the process includes obtaining pieces of position information of each of a plurality of users; when there is an inquiry about an arrangement position of certain merchandise from a user of the plurality of users, specifying a first position where the user has performed a certain action indicating a feature of searching for the arrangement position of the certain merchandise, based on the piece of position information obtained in certain time before execution of the inquiry among the pieces of position information of the user; and determining a second position near the specified first position as a candidate for a new arrangement position of the certain merchandise.

[ADVANTAGEOUS EFFECTS OF INVENTION]

According to one aspect, the present disclosure allows the user to find each piece of merchandise more easily.

BRIEF DESCRIPTION OF DRAWINGS

FIG. 1 is a diagram explaining a configuration of an information processing system;
FIG. 2 is a diagram explaining a hardware configuration of an information processing apparatus;
FIG. 3 is a diagram explaining functions of the information processing apparatus;
FIG. 4 is a flowchart explaining an outline of merchandise purchase support processing in a first embodiment;
FIG. 5 is a diagram explaining a specific example of the merchandise purchase support processing in the first embodiment;
FIG. 6 is a diagram explaining the specific example of the merchandise purchase support processing in the first embodiment;
FIG. 7 is a diagram explaining another specific example of the merchandise purchase support processing in the first embodiment;
FIG. 8 is a flowchart explaining details of the merchandise purchase support processing in the first embodiment;
FIG. 9 is a flowchart explaining the details of the merchandise purchase support processing in the first embodiment;

FIG. 10 is a flowchart explaining the details of the merchandise purchase support processing in the first embodiment;
FIG. 11 is a flowchart explaining the details of the merchandise purchase support processing in the first embodiment;
FIG. 12 is a diagram explaining a specific example of user position information;
FIG. 13 is a diagram explaining a specific example of first position information;
FIG. 14 is a diagram explaining a specific example of second position information;
FIG. 15 is a flowchart explaining the merchandise purchase support processing in a second embodiment;
FIG. 16 is a diagram explaining a specific example of the second position information;
FIG. 17 is a flowchart explaining the merchandise purchase support processing in a third embodiment; and
FIG. 18 is a flowchart explaining the merchandise purchase support processing in the third embodiment.

DESCRIPTION OF EMBODIMENTS

[Configuration of Information Processing System in First Embodiment]

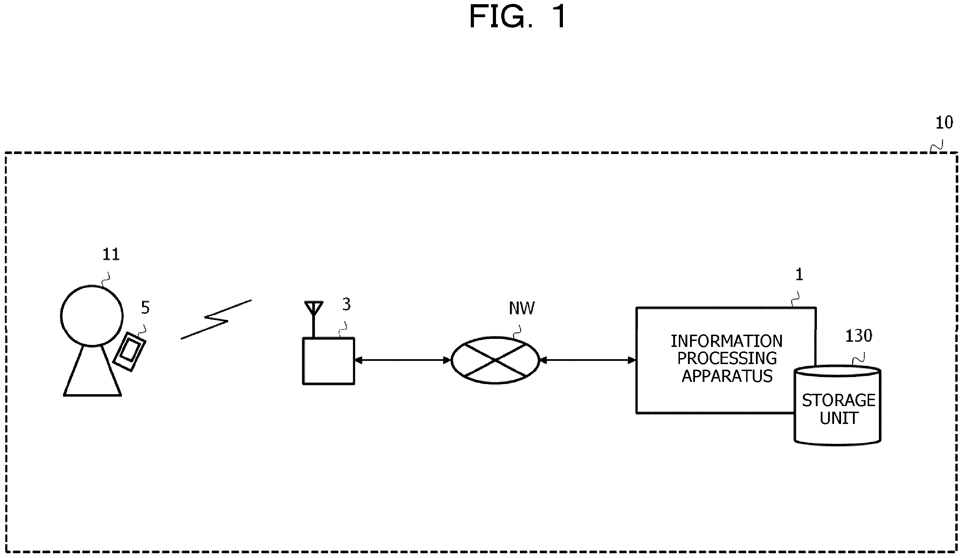

First, a configuration of an information processing system 10 is described. FIG. 1 is a diagram explaining the configuration of the information processing system 10.

The information processing system 10 illustrated in FIG. 1 includes, for example, an information processing apparatus 1 and one or more mobile terminals 5.

The information processing apparatus 1 is, for example, one or more physical machines or virtual machines, and executes processing of determining an arrangement position (layout) of each of pieces of merchandise (hereinafter, also referred to as merchandise purchase support processing). The information processing apparatus 1 includes, for example, a storage unit 130 that stores various pieces of information used to execute the merchandise purchase support processing.

For example, the mobile terminal 5 is a mobile terminal that is held by a user 11 purchasing merchandise in a retail store (hereinafter, also simply referred to as user 11) at least at the time of visiting the store. For example, the mobile terminal 5 may be a mobile terminal such as a smartphone owned by the user 11 or may be a mobile terminal such as a smartphone that is lent out to the user 11 at the retail store.

For example, when the user 11 inputs information inquiring about the arrangement position of the merchandise (hereinafter, also referred to as inquiry information) into the mobile terminal 5, the mobile terminal 5 transmits the inputted inquiry information to the information processing apparatus 1. In this case, for example, the information processing apparatus 1 generates information indicating an answer to the inquiry information received from the mobile terminal 5 (hereinafter, also referred to as answer information), and transmits the answer information to the mobile terminal 5. Then, for example, the mobile terminal 5 displays the answer information transmitted from the information processing apparatus 1 on an output screen (not illustrated) to allow the user 11 to browse the answer information.

For example, this may reduce the time the user 11 takes to find the arrangement position of each piece of merchandise, and reduce the time taken for shopping in the retail store.

When the mobile terminal 5 has a conversational agent function such as a chatbot, for example, the user 11 may input the inquiry information into the mobile terminal 5 by using speech voice. In this case, when the mobile terminal 5 receives the answer information from the information processing apparatus 1, for example, the mobile terminal 5 may notify the user 11 of the received answer information through voice.

In the example illustrated in FIG. 1, the mobile terminal 5 may perform, for example, wireless communication with an access point 3 by using, for example, Wireless Fidelity (WiFi, registered trademark) or the like. The information processing apparatus 1 and the access point 3 may perform, for example, communication (for example, wired communication) via a network NW such as the Internet network.

In the retail store as described above, for example, a layout of each piece of merchandise is changed depending on a sales status or the like of the each piece of merchandise. For instance, a store clerk of the retail store as described above changes the layout of each piece of merchandise at an appropriate timing to, for example, allow the user to find the each piece of merchandise more easily.

However, there is a case where the layout change as described above is performed depending on, for example, the experience or intuition of the store clerk, and a sufficient effect sometimes may not be achieved. For example, a layout that allows the user to find each piece of merchandise more easily is thus desired in the retail store as described above.

Accordingly, the information processing apparatus 1 in the present embodiment continuously obtains, for example, information indicating a current position of each of the multiple users 11 (hereinafter, also referred to as user position information).

For example, when any one of the multiple users 11 (hereinafter, also referred to as specific user 11) makes an inquiry about an arrangement position of any piece of merchandise (hereinafter, also referred to as specific merchandise), the information processing apparatus 1 specifies a position where the specific user 11 has performed a predetermined action indicating a feature of searching for the arrangement position of the merchandise (hereinafter, also referred to as first position), based on the piece of position information obtained in predetermined time before execution of the inquiry among pieces of the obtained position information of the specific user 11. For instance, the information processing apparatus 1 specifies, for example, a position through which the specific user 11 has passed a predetermined number of times (for example, three times) or more, as the first position.

The information processing apparatus 1 then determines, for example, a second position near the specified first position as a candidate for a new arrangement position of the specific merchandise. For instance, the information processing apparatus 1 specifies, for example, a position that is visible to the user 11 at the first position, as the second position. For instance, the information processing apparatus 1 specifies, for example, for each of multiple positions where the specific merchandise is arrangeable, the number of the first positions from which the each position is visible, and specifies the position for which the specified number is the largest among the multiple positions where the specific merchandise is arrangeable, as the second position.

For instance, the information processing apparatus 1 according to the present embodiment determines, for example, the position (second position) visible from the position (first position) where the specific user 11 has performed a significant straying action of searching for the arrangement position of the specific merchandise, as a candidate for the new arrangement position of the specific merchandise.

The information processing apparatus 1 in the present embodiment may thereby determine, for example, a position where the user 11 may easily find the specific merchandise, as the arrangement position of the specific merchandise. Accordingly, for example, the store clerk of the retail store may create a layout that allows the user to find each piece of merchandise more easily, by referring to the candidate for the new arrangement position of each piece of merchandise determined by the information processing apparatus 1.

Examples of the user 11 who is performing the significant straying action include the user 11 who is roaming around in a certain range, the user 11 who is going back and forth at the same location, and the user 11 who is moving while weaving. Examples of the user 11 who is performing the significant straying action also include the user 11 who is moving slowly and the user 11 who is moving while occasionally stopping.

[Hardware Configuration of Information Processing Apparatus]

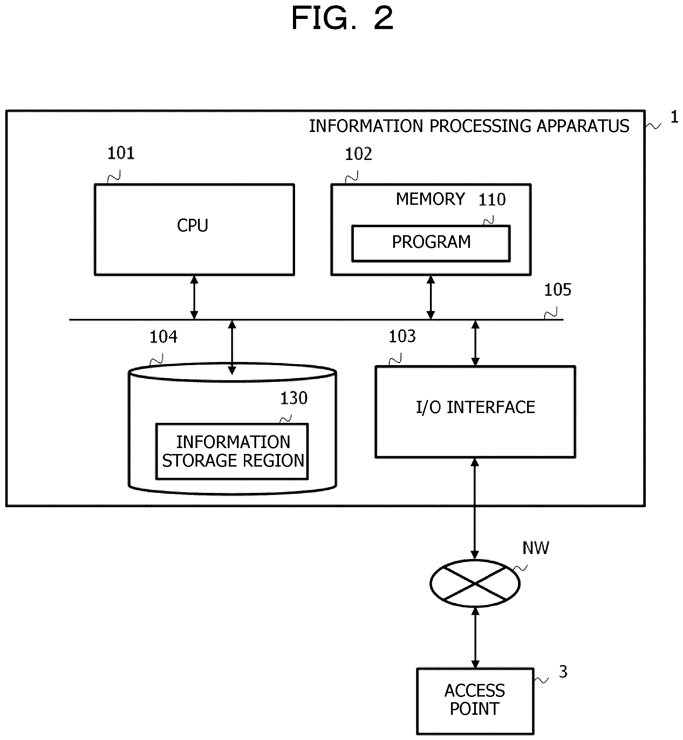

Next, a hardware configuration of the information processing apparatus 1 is described. FIG. 2 is a diagram explaining the hardware configuration of the information processing apparatus 1.

As illustrated in FIG. 2, the information processing apparatus 1 includes, for example, a central processing unit (CPU) 101 that is a processor, a memory 102, a communication device (input/output (I/O) interface) 103, and a storage 104. These components are coupled to one another via a bus 105.

The storage 104 includes, for example, a program storage area (not illustrated) that stores a program 110 used to perform the merchandise purchase support processing. For example, the storage 104 includes the storage unit 130 (hereinafter, also referred to as information storage region 130) that stores information used in execution of the merchandise purchase support processing. For example, the storage 104 may be a hard disk drive (HDD) or a solid-state drive (SSD).

For example, the CPU101 executes the program 110 loaded from the storage 104 to the memory 102 to perform the merchandise purchase support processing.

For example, the communication device 103 performs communication with the access point 3 via the network NW.

[Functions of Information Processing Apparatus]

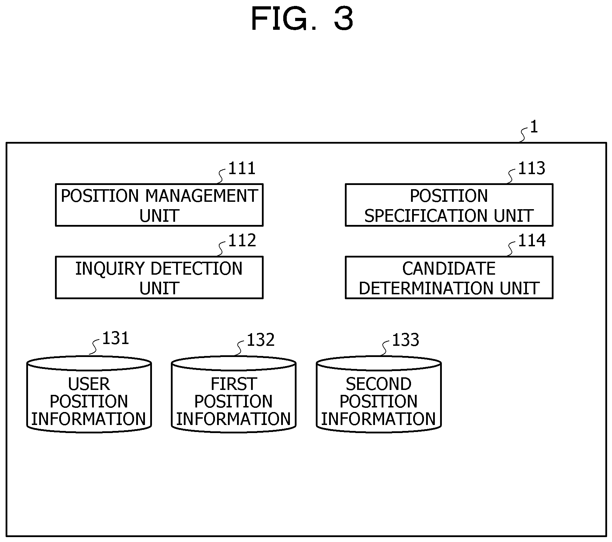

Next, functions of the information processing apparatus 1 are described. FIG. 3 is a diagram explaining the functions of the information processing apparatus 1.

As illustrated in FIG. 3, for example, the information processing apparatus 1 implements various functions including a position management unit 111 (hereinafter, also referred to as position obtaining unit 111), an inquiry detection unit 112, a position specification unit 113, and a candidate determination unit 114 by causing the hardware such as the CPU 101 and the memory 102 and the program 110 to organically cooperate with each other.

As illustrated in FIG. 3, the information processing apparatus 1 stores, for example, user position information 131, first position information 132, and second position information 133 in the information storage region 130.

For example, the position management unit 111 continuously obtains the user position information 131 indicating the current position of each of the multiple mobile terminals 5, from the multiple mobile terminals 5. For instance, the position management unit 111 obtains, for example, the user position information 131 indicating the current position of each of the multiple mobile terminals 5, as information indicating the current position of each of the multiple users 11 who own the respective multiple mobile terminals 5. For example, when the position management unit 111 obtains the user position information 131 from any one of the multiple mobile terminals 5, the position management unit 111 stores the obtained user position information 131 in the information storage region 130. The position management unit 111 may receive, for example, the user position information 131 transmitted from each of the multiple mobile terminals 5.

The inquiry detection unit 112 detects, for example, transmission of the inquiry information from the mobile terminal 5 (hereinafter, also referred to as specific mobile terminal 5), held by the specific user 11 being one of the multiple users 11, to the information processing apparatus 1. For instance, the inquiry detection unit 112 detects that, for example, the specific user 11 has inputted the inquiry information into the specific mobile terminal 5 and the inputted inquiry information is transmitted to the information processing apparatus 1.

For example, when the inquiry detection unit 112 detects transmission of the inquiry information from the specific mobile terminal 5 to the information processing apparatus 1, the position specification unit 113 specifies the first position where the specific user 11 has performed the predetermined action indicating the feature of searching for an arrangement position of specific merchandise, based on the piece of user position information 131 obtained in the predetermined time before execution of the transmission of the inquiry information, among the pieces of user position information 131 continuously obtained from the specific mobile terminal 5 by the position management unit 111. The predetermined time may be, for example, one minute. The position specification unit 113 then stores the first position information 132 indicating the specified first position in the information storage region 130.

The candidate determination unit 114 determines, for example, the second position near the first position specified by the position specification unit 113, as a candidate for the new arrangement position of the specific merchandise. For instance, the candidate determination unit 114 specifies, for example, a position visible to the user 11 located at the first position, as the second position. The candidate determination unit 114 then stores, for example, the second position information 133 indicating the second position determined as a candidate for the new arrangement position of the specific merchandise, in the information storage region 130.

[Outline of Merchandise Purchase Support Processing in First Embodiment]

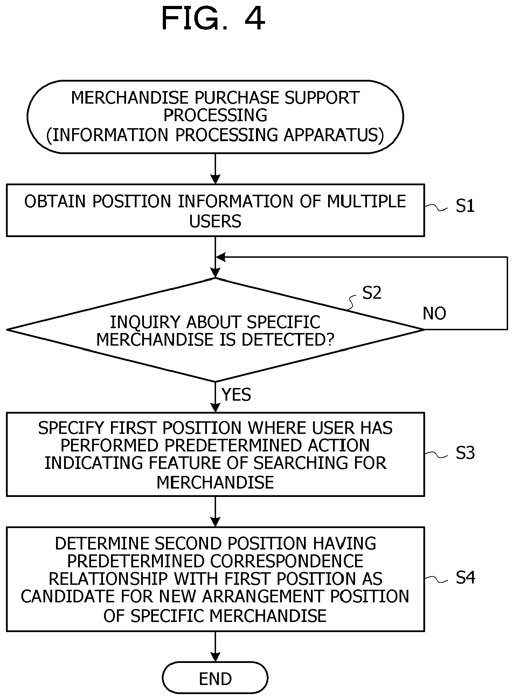

An outline of the first embodiment is described next. FIG. 4 is a flowchart explaining the outline of the merchandise purchase support processing in the first embodiment.

As illustrated in FIG. 4, the information processing apparatus 1 continuously obtains, for example, the user position information 131 indicating the current position of each of the multiple users 11 (S1).

The information processing apparatus 1 then waits until, for example, the information processing apparatus 1 receives an inquiry about an arrangement position of any piece of merchandise from any one of the multiple users 11 (NO in S2).

Then, for example, when the information processing apparatus 1 receives an inquiry about an arrangement position of specific merchandise from a specific user 11 who is one of the multiple users 11 (YES in S2), the information processing apparatus 1 specifies the first position where the specific user 11 has performed the predetermined action indicating the feature of searching for the arrangement position of the merchandise, based on the piece of position information obtained in the predetermined time before execution of the inquiry among the pieces of position information of the specific user 11 (S3).

The information processing apparatus 1 then determines, for example, the second position having a predetermined correspondence relationship with the first position specified in the process of S3, as a candidate for the new arrangement position of the specific merchandise (S4). For instance, the information processing apparatus 1 determines, for example, the second position near the first position specified in the process of S3, as a candidate for the new arrangement position of the specific merchandise.

The information processing apparatus 1 in the present embodiment may thereby determine, for example, a position where the user 11 may easily find the specific merchandise, as the arrangement position of the specific merchandise. Accordingly, for example, the store clerk of the retail store may create a layout that allows the user to find each piece of merchandise more easily, by referring to the candidate for the new arrangement position of each piece of merchandise determined by the information processing apparatus 1.

For example, when multiple first positions are specified in the process of S3, the information processing apparatus 1 may specify, for example, a position near all of the multiple specified first positions as the second position in the process of S4.

[Specific Example of Merchandise Purchase Support Processing in First Embodiment]

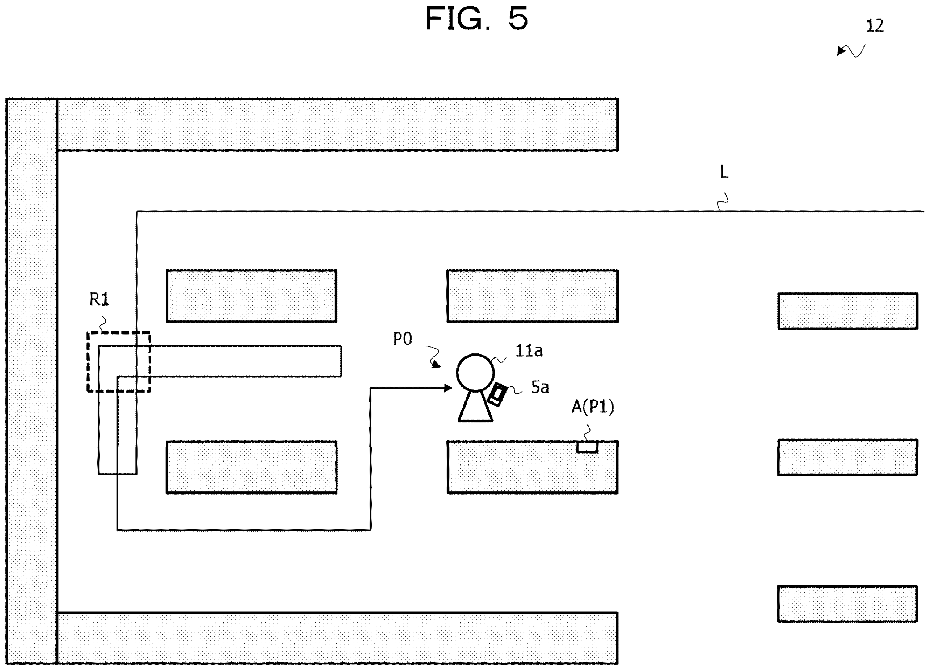

A specific example of the merchandise purchase support processing in the first embodiment is described next. FIGs. 5 to 7 are diagrams explaining the specific example of the merchandise purchase support processing in the first embodiment.

A solid line arrow L in the example illustrated in FIG. 5 indicates, for example, a trajectory of the position indicated by the user position information 131 obtained from the mobile terminal 5a held by the user 11a. For instance, the solid line arrow L in the example illustrated in FIG. 5 indicates, for example, a movement route of the user 11a in a retail store 12. The example illustrated in FIG. 5 also indicates that, for example, the user 11a moves as indicated by the solid line arrow L, and then inputs inquiry information on an arrangement position (position P1) of merchandise A at a position P0.

For instance, the example illustrated in FIG. 5 indicates that, for example, the user 11a holding the mobile terminal 5a performs a straying action in the retail store 12 while searching for the arrangement position of the merchandise A, and then makes the inquiry about the arrangement position of the merchandise A on the mobile terminal 5a.

The solid line arrow L illustrated in FIG. 5 indicates that, for example, the user 11a has passed through a range R1 in the retail store 12 three times, and also indicates that the number of times the user 11a has passed through the range R1 is larger than the numbers of times of passing for the other ranges. Accordingly, in the example illustrated in FIG. 5, the information processing apparatus 1 may determine that, for example, the user 11a has performed the significant straying action in the range R1.

Accordingly, in this case, for example, the information processing apparatus 1 specifies the range R1 as the first position based on the user position information 131 obtained from the mobile terminal 5a in the process of S1.

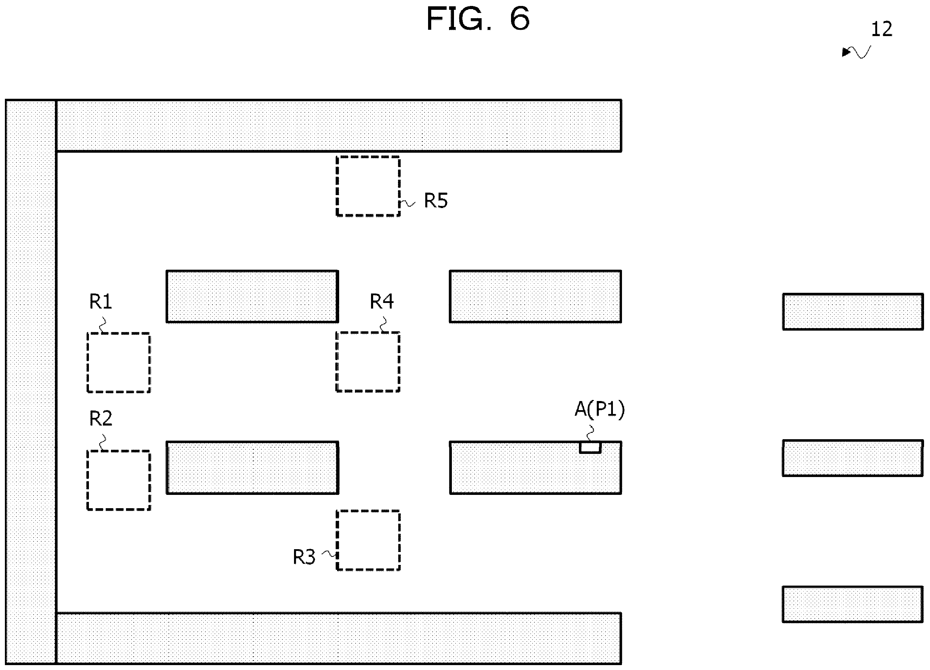

Then, as illustrated in FIG. 6, when each of the range R1, a range R2, a range R3, a range R4, and a range R5 are specified as the first position based on the user position information 131 obtained from the mobile terminals 5a held by the user 11a or based on the user position information 131 obtained from the multiple mobile terminals 5 held by the respective multiple users 11 including the user 11a, the information processing apparatus 1 specifies, for example, the position most visible from each of the range R1, the range R2, the range R3, the range R4, and the range R5 as the second position.

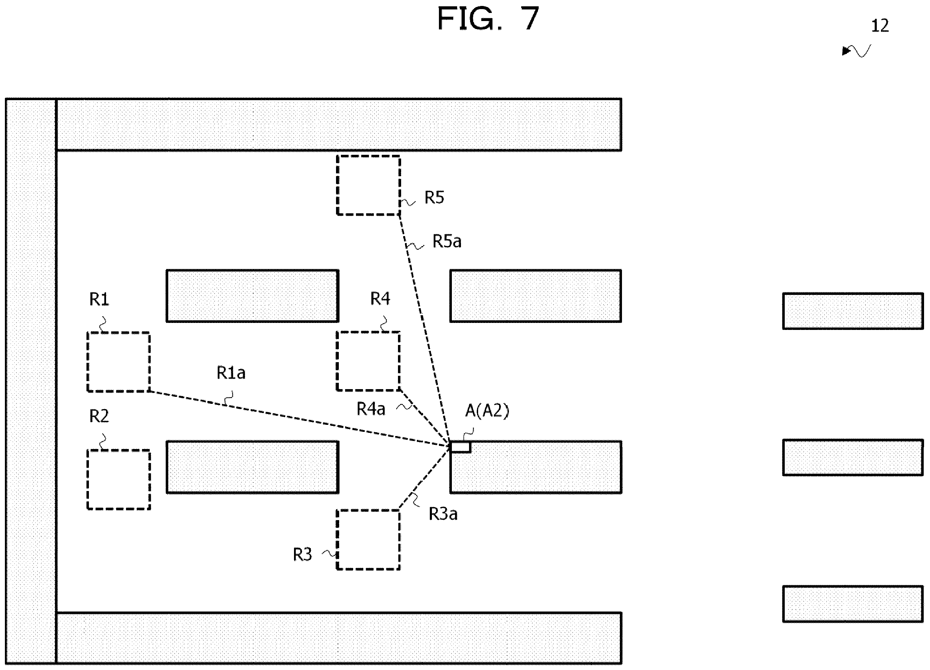

For example, as indicated by a dotted line R1a, a dotted line R3a, a dotted line R4a, and a dotted line R5a in FIG. 7, a position P2 is a position visible from the range R1, the range R3, the range R4, and the range R5. Accordingly, for example, when the information processing apparatus 1 determines that the arrangement position where the merchandise A is visible from the largest number of ranges among the ranges (the range R1, the range R2, the range R3, the range R4, and the range R5) each specified as the first position is the position P2, the information processing apparatus 1 determines the position P2 as a candidate for the new arrangement position of the merchandise A.

Then, the store clerk of the retail store 12 creates, for example, a layout in which the arrangement position of the merchandise A is changed from the position P1 to the position P2 based on the processing result obtained by the information processing apparatus 1.

For example, the information processing apparatus 1 may thereby determine a position as visible as possible from the positions where the users 11 searching for the arrangement position of each piece of merchandise have performed the significant straying action, as the arrangement position of the each piece of merchandise. Accordingly, the store clerk of the retail store 12 may create, for example, a layout based on the new arrangement position of each piece of merchandise determined by the information processing apparatus 1, and thereby create a layout that allows the user to find each piece of merchandise more easily.

[Details of Merchandise Purchase Support Processing in First Embodiment]

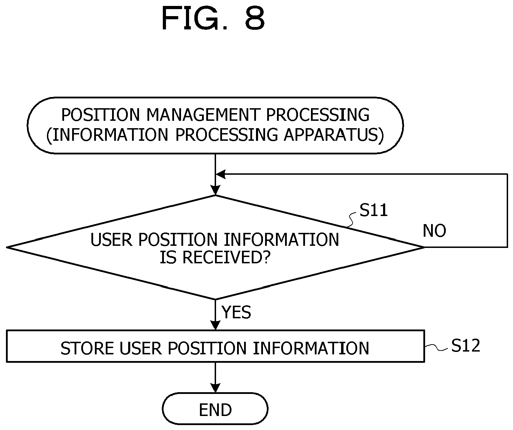

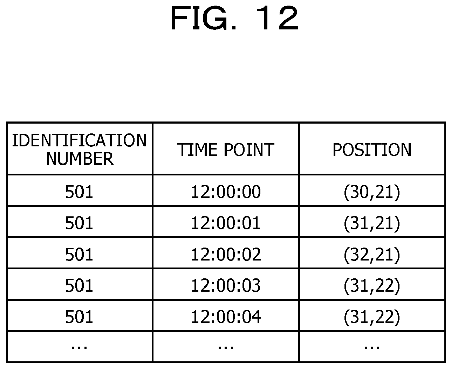

Next, details of the first embodiment are described. FIGs. 8 to 11 are flowcharts explaining details of the merchandise purchase support processing in the first embodiment. FIGs. 12 to 14 are diagrams explaining the details of the merchandise purchase support processing in the first embodiment.

[Position Management Processing]

First, processing of managing the user position information 131 (hereinafter, also referred to as position management processing) in the merchandise purchase support processing is described. FIG. 8 is a flowchart explaining the position management processing.

As illustrated in FIG. 8, the position management unit 111 waits until, for example, the information processing apparatus 1 receives the user position information 131 from the mobile terminal 5 (NO in S11).

For example, the mobile terminal 5 may transmit the user position information 131 indicating the current position of the mobile terminal 5 to the information processing apparatus 1 at predetermined time intervals (for example, every one second). For example, the mobile terminal 5 may calculate the current position by using positioning or the like from the access point 3, and transmit the user position information 131 indicating the calculated current position to the information processing apparatus 1.

When the information processing apparatus 1 receives the user position information 131 from the mobile terminal 5 (YES in S11), for example, the position management unit 111 stores the received user position information 131 in the information storage region 130 (S12). A specific example of the user position information 131 is described below.

[Specific Example of User Position Information]

FIG. 12 is a diagram explaining a specific example of the user position information 131.

The user position information 131 illustrated in FIG. 12 includes, for example, as items, "identification information" in which identification information identifying each of the mobile terminals 5 is set, "time point" in which each of time points is set, and "position" in which information indicating the position of each mobile terminal 5 at each time point is set. For example, the inside of the retail store 12 may be divided in advance into multiple ranges (hereinafter, also referred to as multiple unit ranges) each having a predetermined size. For instance, each of the multiple unit ranges may be a rectangular region having one side with a length of, for example, 50 cm, 1 m, or the like. The multiple unit ranges may be, for example, multiple ranges including the range R1, the range R2, the range R3, the range R4, and the range R5 described in FIG. 6 and the like. For example, a position corresponding to the unit range (for example, the center position of the unit range) including the current position of each mobile terminal 5 may be set in the "position".

For instance, in the information in the first line of the user position information 131 illustrated in FIG. 12, for example, "501" is set as the "identification information", "12:00:00" is set as the "time point", and "(30, 21)" is set as the "position".

In the information in the second line of the user position information 131 illustrated in FIG. 12, for example, "501" is set as the "identification information", "12:00:01" is set as the "time point", and " (31, 21)" is set as the "position". Description of the other pieces of information included in FIG. 12 is omitted.

[First Position Specification Processing]

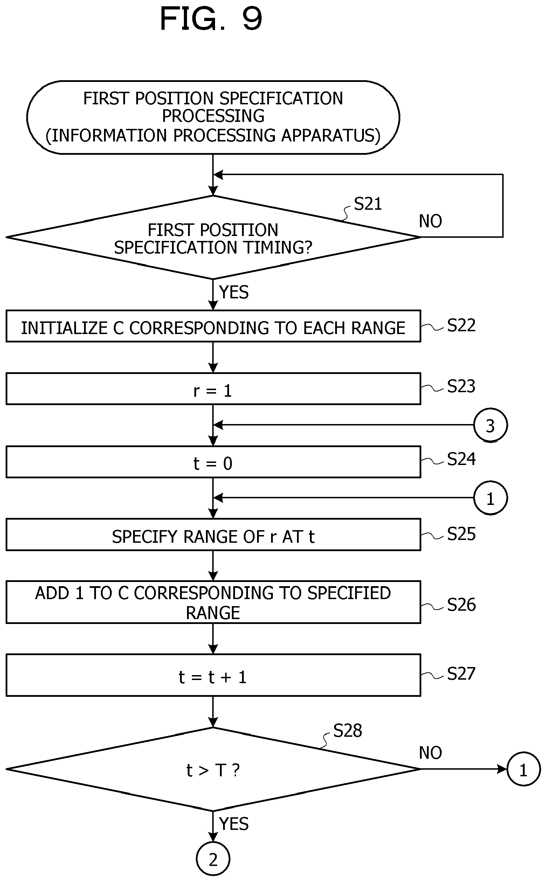

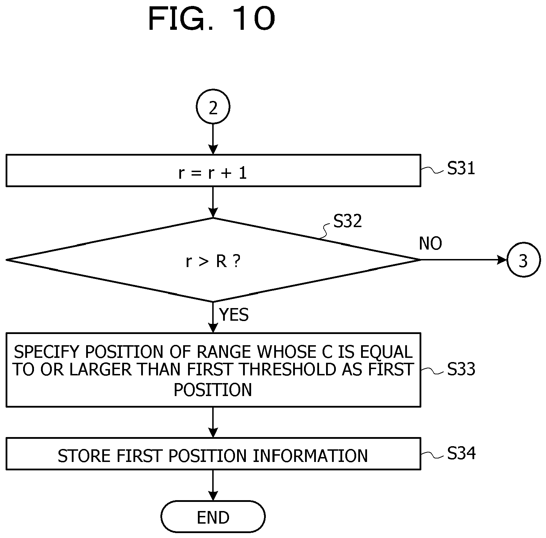

Processing of specifying the first position (hereinafter, also referred to as first position specification processing) in the merchandise purchase support processing is described next. FIGs. 9 and 10 are flowcharts explaining the first position specification processing. The first position specification processing illustrated in FIGs. 9 and 10 is processing performed when the first position corresponding to one piece of merchandise (specific merchandise) is to be specified. Accordingly, for example, when the first positions corresponding to multiple pieces of merchandise are to be specified, the information processing apparatus 1 performs the first position specification processing illustrated in FIGs. 9 and 10 multiple times for the respective pieces of merchandise.

As illustrated in FIG. 9, the position specification unit 113 waits until a first position specification timing comes (NO in S21). The first position specification timing may be, for example, a timing at which the store clerk of the retail store 12 inputs information indicating execution of the first position specification processing into the information processing apparatus 1. Alternatively, the first position specification timing may be, for example, a periodic timing at predetermined time intervals (for example, every one hour).

When the first position specification timing comes (YES in S21), for example, the position specification unit 113 sets each of counters C indicating the numbers of times the user 11 has passed through the respective ranges in the retail store 12 to 0 to initialize the counters C (S22).

For example, the position specification unit 113 sets a variable r to 1 (S23), the variable r indicating the identification information of the user 11 who has transmitted the inquiry information to the information processing apparatus 1 in a predetermined period determined in advance (hereinafter, also simply referred to as predetermined period) (S23). The predetermined period in this case may be, for example, one day or the like.

For example, the position specification unit 113 then sets a variable t to 0 indicating a first time point, the variable t indicating each of time points at which the position management unit 111 has obtained the user position information 131 and that are included in time (hereinafter, also referred to as target time) between a time point preceding a time point at which the user 11 corresponding to the variable r has transmitted the inquiry information by predetermined time and the time point at which the user 11 corresponding to the variable r has transmitted the inquiry information (S24).

For example, the position specification unit 113 then refers to the user position information 131 stored in the information storage region 130, and specifies the range including the position indicated by the piece of user position information 131 obtained at the time point corresponding to the variable t among the pieces of user position information 131 obtained from the mobile terminal 5 held by the user 11 corresponding to the variable r (S25).

For instance, in the information in the first line of the user position information 131 described in FIG. 12, for example "501" is set as the "identification information", "12:00:00" is set as the "time point", and "(30, 21)" is set as the "position". Accordingly, for example, when the identification information of the user 11 corresponding to the variable r is 501 and the time point corresponding to the variable t is 12:00:00, the position specification unit 113 specifies the range corresponding to the position of (30, 21) in the retail store 12

For example, the position specification unit 113 adds 1 to the counter C corresponding to the range specified in the processing of S25 (S26). For example, the position specification unit 113 then adds 1 to the variable t (S27).

Then, for example, the position specification unit 113 determines whether or not the variable t to which 1 is added in the processing of S27 has exceeded a predetermined constant T (S28). The constant T is, for example, the time points included in the target time, and indicates the number of time points at which the position management unit 111 has obtained the user position information 131.

Then, when the position specification unit 113 determines that the variable t does not exceed the constant T (NO in S28), for example, the position specification unit 113 performs the processing of S25 and beyond again.

Meanwhile, when the position specification unit 113 determines that the variable t has exceeded the constant T (YES in S28), for example, the position specification unit 113 adds 1 to the variable r as illustrated in FIG. 10 (S31).

For example, the position specification unit 113 then determines whether or not the variable r to which 1 is added in the processing of S31 has exceeded a predetermined constant R (S32). The constant R is, for example, the number of users 11 who have transmitted inquiry information to the information processing apparatus 1 in the predetermined period.

Then, when the position specification unit 113 determines that the variable r has not exceed the constant R (NO in S32), for example, the position specification unit 113 performs the processing of S24 and beyond again.

Meanwhile, when the position specification unit 113 determines that the variable r has exceeded the constant R (YES in S32), for example, the position specification unit 113 specifies the position of the range whose counter C is equal to or larger than a threshold (hereinafter, also referred to as a first threshold) as the first position (S33).

For instance, the position specification unit 113 specifies, for example, the range whose counter C is equal to or larger than the first threshold among the ranges in the retail store 12, as the range (first position) in which each user 11 has performed the significant straying action.

For example, the position specification unit 113 then stores information indicating the first position specified in the processing of S33 in the information storage region 130, as the first position information 132 (S34). A specific example of the first position information 132 is described below.

[Specific Example of First Position Information]

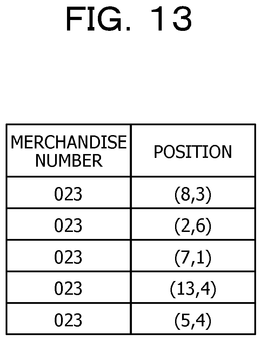

FIG. 13 is a diagram explaining a specific example of the first position information 132. For example, FIG. 13 is a diagram for explaining the specific example of the first position information 132 specified for certain merchandise whose identification information is 023.

For example, the first position information 132 illustrated in FIG. 13 includes, as items, "identification information" in which the identification information of each of pieces of merchandise is set, and "position" in which the position corresponding to each of the ranges specified as the first positions of the respective pieces of merchandise is set.

For instance, in the information in the first line of the first position information 132 illustrated in FIG. 13, for example, "023" is set as the "identification information" and "(8, 3)" is set as the "position".

In the information in the second line of the first position information 132 illustrated in FIG. 13, for example, "023" is set as the "identification information" and "(2, 6)" is set as the "position". Description of the other pieces of information included in FIG. 13 is omitted.

[Second Position Specification Processing]

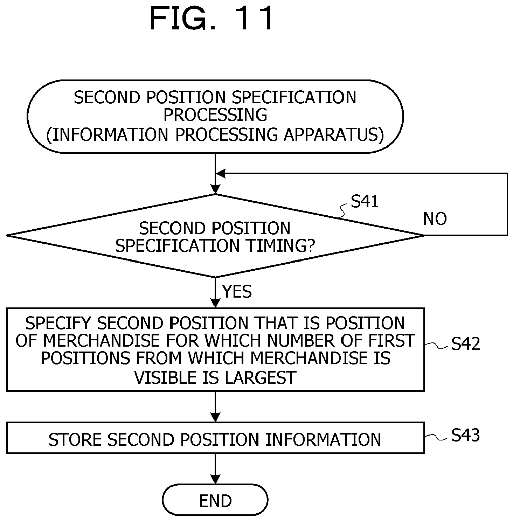

Processing of specifying the second position (hereinafter, also referred to as second position specification processing) in the merchandise purchase support processing is described next. FIG. 11 is a flowchart explaining the second position specification processing. The second position specification processing illustrated in FIG. 11 is processing performed when the second position corresponding to one piece of merchandise (specific merchandise) is to be specified. Accordingly, for example, when the second positions corresponding to multiple pieces of merchandise are to be specified, the information processing apparatus 1 performs the second position specification processing illustrated in FIG. 11 multiple times for the respective pieces of merchandise.

As illustrated in FIG. 11, the position specification unit 113 waits until a second position specification timing comes (NO in S41). The second position specification timing may be, for example, a timing at which the store clerk of the retail store 12 inputs information indicating execution of the second position specification processing into the information processing apparatus 1. The second position specification timing may be, for example, a periodic timing at predetermined time intervals (for example, every day).

When the second position specification timing comes (YES in S41), for example, the candidate determination unit 114 determines the second position such that the number of the first positions from which the merchandise is visible is maximized (S42).

For example, the candidate determination unit 114 may calculate the number ($f(x)$) of the first positions from which the merchandise is visible, according to the following Formula 1.

...

$$f(x) = \Sigma\_y\ v(x,y) \qquad \text{... (Formula 1)}$$

In Formula 1, x is the arrangement position of the merchandise, and y is the first position of the merchandise. In Formula 1, $\Sigma\_y$ indicates that a sum of y is to be obtained. In Formula 1, v(x, y) is a function indicating whether or not x is visible to the user 11 located at y, returns 1 when x is visible to the user 11 located at y, and returns 0 when x is not visible to the user 11 located at y.

For example, the candidate determination unit 114 calculates f(x) multiple times while changing x. For instance, the candidate determination unit 114 may calculate f(x) multiple times while, for example, changing x in a shelf on which the merchandise is arranged. For instance, the candidate determination unit 114 may calculate f(x) multiple times while, for example, sliding x in a left-right direction (horizontal direction) in the case where the shelf on which the merchandise is arranged is viewed from the aisle side. Then, for example, the candidate determination unit 114 specifies x at which the value of f(x) is the largest, as the second position.

Returning to FIG. 11, for example, the candidate determination unit 114 stores information indicating the second position specified in the processing of S42, in the information storage region 130 as the second position information 133 (S43). A specific example of the second position information 133 is described below.

[Specific Example of Second Position Information]

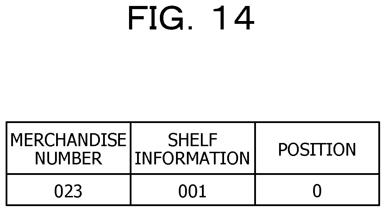

FIG. 14 is a diagram for explaining a specific example of the second position information 133.

For example, the second position information 133 illustrated in FIG. 14 includes, as items, "identification information" in which the identification information of the merchandise is set, "shelf information" in which identification information of the shelf on which the merchandise is arranged is set, and "position" in which a position specified as the second position of the merchandise is set. For example, the length, in the left-right direction, of the shelf for which the identification information is set in the "shelf information" (the length of the shelf in the left-right direction in the case where the shelf is viewed from the aisle) is normalized, and a length from the left end in this case is set in the "position". For example, when the left end of the shelf in the left-right direction is the arrangement position of the merchandise, "0" is set in the "position". When the right end of the shelf in the left-right direction is the arrangement position of the merchandise, "1" is set in the "position". When the center of the shelf in the left-right direction is the arrangement position of the merchandise, "0.5" is set in the "position".

For instance, in the information in the first line of the second position information 133 illustrated in FIG. 14, for example, "023" is set as the "identification information", "001" is set as the "shelf information", and "0" is set as the "position".

As described above, for example, the information processing apparatus 1 in the present embodiment continuously obtains the user position information 131 indicating the current position of each of the multiple users 11. For example, when the information processing apparatus 1 receives an inquiry about the arrangement position of the specific merchandise from the specific user 11 being any one of the multiple users 11, the information processing apparatus 1 specifies the first position where the specific user 11 has performed the predetermined action indicating the feature of searching for the arrangement position of the specific merchandise, based on the piece of position information obtained in the predetermined time before execution of the inquiry among the obtained pieces of position information of the specific user 11.

The information processing apparatus 1 then determines, for example, a second position near the specified first position as a candidate for a new arrangement position of the specific merchandise.

For instance, the information processing apparatus 1 according to the present embodiment determines, for example, the position (second position) visible from the position (first position) where the specific user 11 has performed a significant straying action of searching for the arrangement position of the specific merchandise, as a candidate for the new arrangement position of the specific merchandise.

The information processing apparatus 1 in the present embodiment may thereby determine, for example, a position where the user 11 may easily find the specific merchandise, as the arrangement position of the specific merchandise. Accordingly, for example, the store clerk of the retail store 12 may create a layout that allows the user 11 to find each piece of merchandise more easily, by referring to the candidate for the new arrangement position of each piece of merchandise determined by the information processing apparatus 1.

In the process of S42, for example, the information processing apparatus 1 may determine the second position of each piece of merchandise to be any position in the shelf on which the each piece of merchandise is currently arranged. For instance, the information processing apparatus 1 may determine the second position of each piece of merchandise such that, for example, the second position of the each piece of merchandise is on the same shelf as the current position of the each piece of merchandise.

The information processing apparatus 1 may thereby suppress a large change in the arrangement position of each piece of merchandise. Accordingly, for example, the store clerk of the retail store 12 may suppress the occurrence of the case where the user 11 who knows the current arrangement position of each piece of merchandise becomes unable to find the new arrangement position of the each piece of merchandise.

For example, the information processing apparatus 1 may specify multiple second positions for each piece of merchandise in the process of S42. For instance, the candidate determination unit 114 may specify, for example, the second position for which the number of the first positions from which the each piece of merchandise is visible is the largest, and the second position (hereinafter, also referred to as third position) for which the number of the first positions from which the each piece of merchandise is visible is the second largest. For example, the candidate determination unit 114 may specify a combination of a predetermined number (for example, two) of the second positions for which a sum of the numbers of the first positions from which the each piece of merchandise is visible is the largest. In this case, for example, the store clerk of the retail store 12 may determine all of the multiple second positions for the each piece of merchandise as candidates for the new arrangement position of the each piece of merchandise, and arrange each piece of merchandise at each of the determined candidates for the new arrangement position.

For example, the information processing apparatus 1 may specify one or more pieces of merchandise whose sales records in a predetermined period (for example, the latest one month) satisfy a predetermined condition among the pieces of merchandise sold in the retail store 12, as the specific merchandise. For instance, the information processing apparatus 1 may, for example, specify merchandise whose sales number is equal to or larger than a threshold or merchandise whose rank of sales number is a predetermined rank or above among the pieces of merchandise sold in the retail store 12, as the specific merchandise. For example, the information processing apparatus 1 may specify merchandise whose sales proceeds are equal to or larger than a threshold or merchandise whose rank of sales proceeds is a predetermined rank or above among the pieces of merchandise sold in the retail store 12, as the specific merchandise.

Thus, even when the candidates for new arrangement positions are not specified for all pieces of merchandise, the store clerk of the retail store 12 may create a layout that allows the user 11 to find each piece of merchandise more easily by, for example, referring to the candidate for the new arrangement position of the specific merchandise. For instance, the store clerk of the retail store 12 may efficiently create, for example, a layout that allows the user 11 to find each piece of merchandise more easily.

[Merchandise Purchase Support Processing in Second Embodiment]

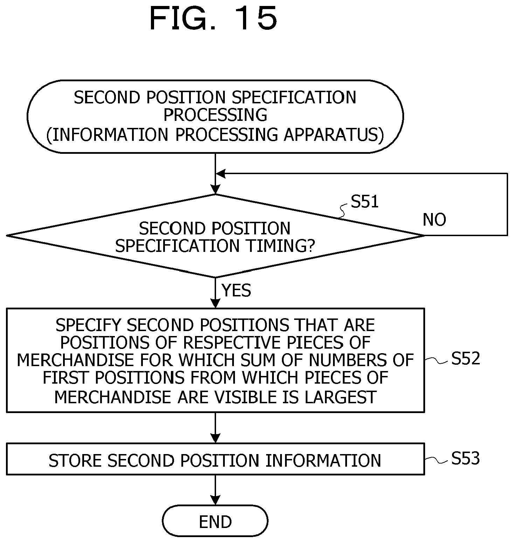

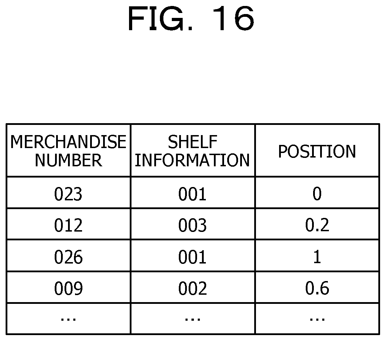

Next, a second embodiment is described. FIG. 15 is a flowchart explaining the merchandise purchase support processing in the second embodiment. FIG. 16 is a diagram explaining the merchandise purchase support processing in the second embodiment.

The merchandise purchase support processing in the second embodiment is processing of collectively specifying the second positions of multiple pieces of merchandise by using the first positions specified for each of the multiple pieces of merchandise.

The information processing apparatus 1 in the present embodiment may thereby determine, for example, the arrangement positions of the respective multiple pieces of merchandise to be positions easily found by the user 11. Accordingly, for example, the store clerk of the retail store 12 may create a layout based on the new arrangement positions of the respective pieces of merchandise determined by the information processing apparatus 1, and thereby determine a layout that allows the user 11 to find each piece of merchandise more easily.

The merchandise purchase support processing in the second embodiment is different from the merchandise purchase support processing in the first embodiment only in the second position specification processing. Accordingly, the second position specification processing in the second embodiment is described below.

[Second Position Specification Processing]

FIG. 15 is a flowchart explaining the second position specification processing.

As illustrated in FIG. 15, the position specification unit 113 waits until the second position specification timing comes (NO in S51).

When the second position specification timing comes (YES in S51), for example, the candidate determination unit 114 determines the second positions of the respective multiple pieces of merchandise such that a sum of the numbers of the first positions is maximized (S52), the first positions each being a position that corresponds to one of the multiple pieces of merchandise and from which the corresponding one of the multiple pieces of merchandise is visible.

For instance, the candidate determination unit 114 may calculate, for example, the sum ($F(x)$) of the numbers of first positions that each correspond to the one of the pieces of merchandise and from each of which the corresponding piece of merchandise is visible, according to the following Formula 2.

$$F(x) = \Sigma\_i\, f(xi) = \Sigma\_i\, \Sigma\_y\, v(xi,y) \quad \text{... (Formula 2)}$$

In Formula 2, xi is the arrangement position of an i-th piece of merchandise, and y is the first position of the i-th piece of merchandise. In Formula 2, $\Sigma\_y$ indicates that a sum of y is to be obtained, and $\Sigma\_i$ indicates that a sum of i is to be obtained. In Formula 2, v(xi, y) is a function indicating whether or not xi is visible to the user 11 located at y, returns 1 when xi is visible to the user 11 located at y, and returns 0 when xi is not visible to the user 11 located at y.

The candidate determination unit 114 calculates F(x) multiple times while changing xi corresponding to each piece of merchandise. For instance, the candidate determination unit 114 may calculate F(x) multiple times while, for example, changing xi in the shelf on which the each piece of merchandise is arranged. For instance, the candidate determination unit 114 may calculate F(x) multiple times while, for example, sliding xi in the left-right direction (horizontal direction) in the case where the shelf on which the each piece of merchandise is arranged is viewed from the aisle side. For example, the candidate determination unit 114 then specifies xi at which the value of F(x) is the largest, as the second position corresponding to the each piece of merchandise.

Returning to FIG. 11, for example, the candidate determination unit 114 stores information indicating the second positions corresponding to the respective pieces of merchandise specified in the processing of S52, in the information storage region 130 as the second position information 133 (S53). A specific example of the second position information 133 is described below.

[Specific Example of Second Position Information]

FIG. 16 is a diagram explaining a specific example of the second position information 133.

For example, the second position information 133 illustrated in FIG. 16 includes the same items as those of the second position information 133 described in FIG. 14.

For instance, in the information in the first line of the second position information 133 illustrated in FIG. 14, for example, "023" is set as the "identification information", "001" is set as the "shelf information", and "0" is set as the "position".

In the information in the second line of the second position information 133 illustrated in FIG. 14, for example, "012" is set as the "identification information", "003" is set as the "shelf information", and "0.2" is set as the "position". Description of the other pieces of information included in FIG. 14 is omitted herein.

As described above, for example, when the information processing apparatus 1 in the present embodiment receives an inquiry (hereinafter, also referred to as first inquiry) about the arrangement position of the merchandise (hereinafter, also referred to as first merchandise) from the specific user 11, the information processing apparatus 1 specifies the first position where the specific user 11 has performed the predetermined action, based on the piece of position information obtained in predetermined time before the execution of the first inquiry among the pieces of position information of the specific user 11. For example, when the first processing apparatus 1 receives another inquiry (hereinafter, also referred to as second inquiry) about the arrangement position of another piece of merchandise (hereinafter, also referred to as second merchandise) from the specific user 11 or another user 11 different from the specific user 11 (hereinafter, also referred to as specific user 11 or the like), the information processing apparatus 1 specifies the first position where the specific user 11 or the like has performed the predetermined action, based on the piece of position information obtained in the predetermined time before the execution of the second inquiry among the pieces of position information of the specific user 11 or the like.

For example, the information processing apparatus 1 then determines the second position near the first position corresponding to the first merchandise as a candidate for the new arrangement position of the first merchandise, and determines the second position near the first position corresponding to the second merchandise as a candidate for the new arrangement position of the second merchandise.

For instance, the information processing apparatus 1 specifies, for example, for each of multiple positions where the first merchandise is arrangeable, the number (hereinafter, also referred to as first number) of the first positions from which the each position is visible among the first positions corresponding to the first merchandise, and specifies, for each of multiple positions where the second merchandise is arrangeable, the number (hereinafter, also referred to as second number) of the first positions from which the each position is visible among the first positions corresponding to the second merchandise. For example, the information processing apparatus 1 then determines the second position corresponding to the first merchandise and the second position corresponding to the second merchandise such that a sum of the first number and the second number corresponding to the respective second positions is maximized.

The information processing apparatus 1 in the present embodiment may thereby determine, for example, the arrangement positions of the respective multiple pieces of merchandise to be positions easily found by the user 11.

[Merchandise Purchase Support Processing in Third Embodiment]

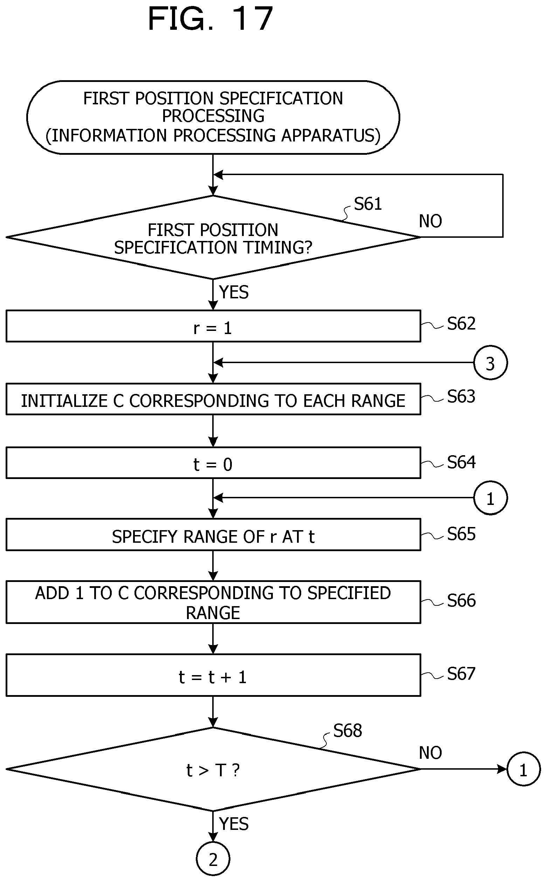

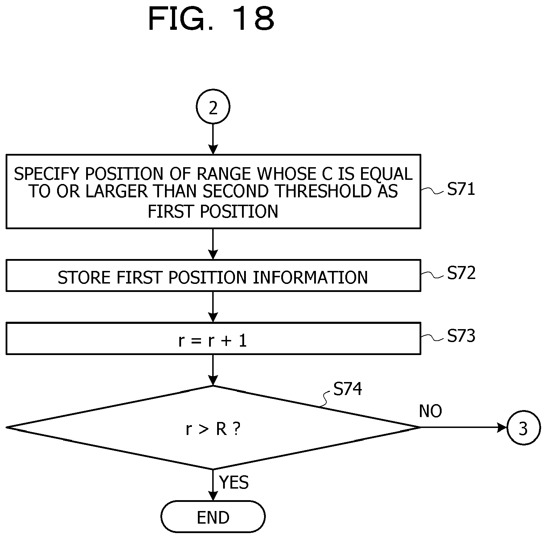

Next, a third embodiment is described. FIGs. 17 and 18 are flowcharts explaining the merchandise purchase support processing in the third embodiment.

The merchandise purchase support processing according to the third embodiment specifies the first position by a method different from that in the merchandise purchase support processing in the first embodiment.

For example, this allows the information processing apparatus 1 to specify the first position having a tendency different from that of the merchandise purchase support processing in the first embodiment. Accordingly, for example, the store clerk of the retail store 12 may create a layout having a tendency different from that of the layout using the first position specified in the first embodiment.

The merchandise purchase support processing in the third embodiment is different from the merchandise purchase support processing in the first embodiment only in the first position specification processing. The first position specification processing in the third embodiment is thus described below.

[First Position Specification Processing]

FIGs. 17 and 18 are flowcharts explaining the first position specification processing.

As illustrated in FIG. 17, the position specification unit 113 waits until the first position specification timing comes (NO in S61).

When the first position specification timing comes (YES in S61), for example, the position specification unit 113 sets the variable r to 1 (S62), the variable r indicating the identification information of the user 11 who has transmitted the inquiry information to the information processing apparatus 1.

For example, the position specification unit 113 then sets each of the counters C indicating the numbers of times the user 11 has passed through the respective ranges in the retail store 12 to 0 to initialize the counters C (S63).

For example, the position specification unit 113 then sets the variable t to 0 indicating the first time point, the variable t indicating each of the time points at which the position management unit 111 has obtained the user position information 131 and that are included in the time (target time) between the time point preceding the time point at which the user 11 corresponding to the variable r has transmitted the inquiry information by the predetermined time and the time point at which the user 11 corresponding to the variable r has transmitted the inquiry information (S64).

For example, the position specification unit 113 then refers to the user position information 131 stored in the information storage region 130, and specifies the range including the position indicated by the piece of user position information 131 obtained at the time point corresponding to the variable t among the pieces of user position information 131 obtained from the mobile terminal 5 held by the user 11 corresponding to the variable r (S65).

For example, the position specification unit 113 adds 1 to the counter C corresponding to the range specified in the processing of S65 (S66). Then, for example, the position specification unit 113 adds 1 to the variable t (S67).

Then, for example, the position specification unit 113 determines whether or not the variable t to which 1 is added in the processing of S67 has exceeded the predetermined constant T (S68).

Then, when the position specification unit 113 determines that the variable t does not exceed the constant T (NO in S68), for example, the position specification unit 113 performs the processing of S65 and beyond again.

Meanwhile, when the position specification unit 113 determines that the variable t has exceeded the constant T (YES in S68), as illustrated in FIG. 18, for example, the position specification unit 113 specifies the position of the range whose counter C is equal to or larger than a threshold (hereinafter, also referred to as second threshold) as the first position (S71).

For instance, the position specification unit 113 specifies, for example, the range whose counter C is equal to or larger than the second threshold among the ranges in the retail store 12, as the range (first position) in which the user 11 corresponding to the variable r has performed the significant straying action.

For example, the position specification unit 113 stores information indicating the first position specified in the processing of S71 in the information storage region 130, as the first position information 132 (S72).

For example, the position specification unit 113 then adds 1 to the variable r (S73).

For example, the position specification unit 113 then determines whether or not the variable r to which 1 is added in the processing of S73 has exceeded the predetermined constant R (S74).

Then, when the position specification unit 113 determines that the variable r has not exceed the constant R (NO in S74), for example, the position specification unit 113 performs the processing of S63 and beyond again.

Meanwhile, when the position specification unit 113 determines that the variable r has exceed the constant R (YES in S74), for example, the position specification unit 113 terminates the first position specification processing.

For example, the information processing apparatus 1 in the first embodiment specifies a range in which the number of times of passing by multiple users 11 is larger than those of the other ranges (range in which the total dwell time of multiple users 11 is longer than those in the other ranges) as the first position. Meanwhile, the information processing apparatus 1 in the third embodiment specifies a range in which the number of times of passing by a single user 11 is larger than those of the other ranges (range in which the total dwell time of a single user 11 is longer than those in the other ranges) as the first position.

For example, this allows the information processing apparatus 1 in the present embodiment to specify the range in which the user 11 has performed the significant straying action as the first position, and the first position having a tendency different from that of the merchandise purchase support processing in the first embodiment may be specified.

For example, in the process of S42, the information processing apparatus 1 may specify the second position by using each of the first position specified in the first position specification processing in the first embodiment and the first position specified in the first position specification processing in the third embodiment.

For example, in the process of S42, the information processing apparatus 1 may specify the second position by using a position where the user 11 have inputted the inquiry information into the mobile terminal 5 as the first position, in addition to the first position specified in the first position specification processing in the first embodiment and the first position specified in the first position specification processing in the third embodiment.

**Claims**

1. A merchandise purchase support program that causes at least one computer to execute a process, the process comprising:

   obtaining pieces of position information of each of a plurality of users;
   when there is an inquiry about an arrangement position of certain merchandise from a user of the plurality of users, specifying a first position where the user has performed a certain action indicating a feature of searching for the arrangement position of the certain merchandise, based on the piece of position information obtained in certain time before execution of the inquiry among the pieces of position information of the user; and
   determining a second position near the specified first position as a candidate for a new arrangement position of the certain merchandise.

2. The merchandise purchase support program according to claim 1, wherein
   the second position is a position visible to the user at the first position.

3. The merchandise purchase support program according to claim 1, wherein
   the second position is a position in a same shelf as the arrangement position of the certain merchandise.

4. The merchandise purchase support program according to claim 1, wherein
   the specifying includes specifying a position through which the user has passed a certain number of times or more as the first position.

5. The merchandise purchase support program according to claim 1, wherein the determining includes:

   specifying, for each of a plurality of positions where the certain merchandise is arrangeable, the number of the first position from which the each position is visible; and
   specifying the position for which the number is the largest among the plurality of positions where the certain merchandise is arrangeable as the second position.

6. The merchandise purchase support program according to claim 1, wherein the determining includes:

   specifying, among a plurality of positions where the certain merchandise is arrangeable, a third position that has been specified as the first position second most times next to the second position; and
   determining each of the second position and the third position as the candidate for the new arrangement position of the certain merchandise.

7. The merchandise purchase support program according to claim 1, wherein

   in the determining, among combinations of a certain number of positions included in a plurality of positions where the certain merchandise is arrangeable, the combination for which a sum of the numbers of times the certain number of positions are specified as the first position is the largest is specified, and
   each of the certain number of positions included in the specified combination is specified as the second position.

8. The merchandise purchase support program according to claim 1, wherein

the specifying includes specifying the first position corresponding to each of the plurality of users, and
the determining includes specifying a position near each of the specified first positions as the second position.

9. The merchandise purchase support program according to claim 8, wherein
the specifying includes specifying a position through which the plurality of users have passed a certain number of times or more as the first position.

10. The merchandise purchase support program according to claim 1, wherein the process further comprising specifying the certain merchandise from a plurality of pieces of merchandise based on a sales record of each of the plurality of pieces of merchandise.

11. The merchandise purchase support program according to claim 1, wherein the specifying includes:

when there is a first inquiry about an arrangement position of first merchandise from the user, specifying the first position where the user has performed the certain action based on the piece of position information obtained in the certain time before execution of the first inquiry among the pieces of position information of the user, and
when there is a second inquiry about an arrangement position of second merchandise from the user, specifying the first position where the user has performed the certain action based on the piece of position information obtained in the certain time before execution of the second inquiry among the pieces of position information of the user, and
the determining includes:

determining the second position near the first position corresponding to the first merchandise as a candidate for a new arrangement position of the first merchandise, and
determining the second position near the first position corresponding to the second merchandise as a candidate for a new arrangement position of the second merchandise.

12. The merchandise purchase support program according to claim 11, wherein the determining includes:

specifying a first number for each of a plurality of positions where the first merchandise is arrangeable, the first number being the number of the first positions from which the each position is visible among the first positions corresponding to the first merchandise,
specifying a second number for each of a plurality of positions where the second merchandise is arrangeable, the second number being the number of the first positions from which the each position is visible among the first positions corresponding to the second merchandise, and
determining the second position corresponding to the first merchandise and the second position corresponding to the second merchandise such that a sum of the first number and the second number corresponding to the respective second positions is maximized.

13. An information processing apparatus comprising:

a position obtaining unit that obtains pieces of position information of each of a plurality of users;
a position specification unit that, when there is an inquiry about an arrangement position of certain merchandise from a user of the plurality of users, specifies a first position where the user has performed a certain action indicating a feature of searching for the arrangement position of the certain merchandise, based on the piece of position information obtained in certain time before execution of the inquiry among the pieces of position information of the user; and
a candidate determination unit that determines a second position near the specified first position as a candidate for a new arrangement position of the certain merchandise.

14. A merchandise purchase support method for a computer to execute a process comprising:

obtaining pieces of position information of each of a plurality of users;
when there is an inquiry about an arrangement position of certain merchandise from a user of the plurality of users, specifying a first position where the user has performed a certain action indicating a feature of searching for the arrangement position of the certain merchandise, based on the piece of position information obtained in certain time before execution of the inquiry among the pieces of position information of the user; and determining a second position near the specified first position as a candidate for a new arrangement position of the certain merchandise.

# FIG. 1

# FIG. 2

INFORMATION PROCESSING APPARATUS ∿ 1

101

CPU

102

MEMORY  110

PROGRAM

105

104

130

INFORMATION
STORAGE REGION

103

I/O INTERFACE

NW

ACCESS
POINT

3

# FIG. 3

```
                                    ⌐1
┌────────────────────────────────────────────────────────┐
│       ⌐111                           ⌐113               │
│  ┌──────────────────┐         ┌──────────────────┐      │
│  │POSITION MANAGEMENT│        │    POSITION      │      │
│  │      UNIT        │         │SPECIFICATION UNIT│      │
│  └──────────────────┘         └──────────────────┘      │
│       ⌐112                           ⌐114               │
│  ┌──────────────────┐         ┌──────────────────┐      │
│  │ INQUIRY DETECTION│         │    CANDIDATE     │      │
│  │      UNIT        │         │DETERMINATION UNIT│      │
│  └──────────────────┘         └──────────────────┘      │
│                                                          │
│    ⌐131              ⌐132              ⌐133              │
│  ┌─────────┐      ┌─────────┐      ┌─────────┐          │
│  │  USER   │      │  FIRST  │      │ SECOND  │          │
│  │POSITION │      │POSITION │      │POSITION │          │
│  │INFORMATION│    │INFORMATION│    │INFORMATION│        │
│  └─────────┘      └─────────┘      └─────────┘          │
└────────────────────────────────────────────────────────┘
```

# FIG. 4

```
┌─────────────────────────────────────────┐
│   MERCHANDISE PURCHASE SUPPORT           │
│   PROCESSING                             │
│   (INFORMATION PROCESSING APPARATUS)     │
└─────────────────────────────────────────┘
                    │
                    ▼
┌─────────────────────────────────────────┐
│   OBTAIN POSITION INFORMATION OF MULTIPLE │  ~ S1
│   USERS                                  │
└─────────────────────────────────────────┘
                    │
                    ▼
              ╱─────────────╲
            ╱                 ╲  S2          NO
          ╱   INQUIRY ABOUT     ╲───────────────┐
          ╲   SPECIFIC           ╱              │
            ╲ MERCHANDISE IS    ╱               │
              ╲ DETECTED?     ╱                 │
                ╲───────────╱                   │
                    │ YES                       │
                    ▼                           │
┌─────────────────────────────────────────┐    │
│   SPECIFY FIRST POSITION WHERE USER HAS  │ ~ S3│
│   PERFORMED PREDETERMINED ACTION         │    │
│   INDICATING FEATURE OF SEARCHING FOR    │    │
│   MERCHANDISE                            │    │
└─────────────────────────────────────────┘    │
                    │                           │
                    ▼                           │
┌─────────────────────────────────────────┐    │
│   DETERMINE SECOND POSITION HAVING       │    │
│   PREDETERMINED CORRESPONDENCE           │ ~ S4│
│   RELATIONSHIP WITH FIRST POSITION AS    │    │
│   CANDIDATE FOR NEW ARRANGEMENT POSITION │    │
│   OF SPECIFIC MERCHANDISE                │    │
└─────────────────────────────────────────┘    │
                    │                           │
                    ▼                           │
                ┌───────┐                       │
                │  END  │                       │
                └───────┘                       │
```

EP 4 361 924 A1

# FIG. 5

# FIG. 6

EP 4 361 924 A1

# FIG. 7

# FIG. 8

POSITION MANAGEMENT PROCESSING
(INFORMATION PROCESSING APPARATUS)

USER POSITION INFORMATION
IS RECEIVED? — S11

NO

YES

STORE USER POSITION INFORMATION — S12

END

# FIG. 9

FIRST POSITION SPECIFICATION PROCESSING
(INFORMATION PROCESSING APPARATUS)

FIRST POSITION SPECIFICATION TIMING? — S21 — NO

YES

INITIALIZE C CORRESPONDING TO EACH RANGE — S22

$r = 1$ — S23

③

$t = 0$ — S24

①

SPECIFY RANGE OF r AT t — S25

ADD 1 TO C CORRESPONDING TO SPECIFIED RANGE — S26

$t = t + 1$ — S27

$t > T$ ? — S28 — NO → ①

YES

②

# FIG. 10

②

| r = r + 1 | ～S31 |

S32

r > R ? —NO→ ③

YES

| SPECIFY POSITION OF RANGE WHOSE C IS EQUAL TO OR LARGER THAN FIRST THRESHOLD AS FIRST POSITION | ～S33 |

| STORE FIRST POSITION INFORMATION | ～S34 |

END

# FIG. 11

SECOND POSITION SPECIFICATION
PROCESSING
(INFORMATION PROCESSING APPARATUS)

SECOND POSITION
SPECIFICATION TIMING? — S41 — NO

YES

SPECIFY SECOND POSITION THAT IS POSITION
OF MERCHANDISE FOR WHICH NUMBER OF FIRST
POSITIONS FROM WHICH MERCHANDISE IS
VISIBLE IS LARGEST — S42

STORE SECOND POSITION INFORMATION — S43

END

# FIG. 12

| IDENTIFICATION NUMBER | TIME POINT | POSITION |
|---|---|---|
| 501 | 12:00:00 | (30,21) |
| 501 | 12:00:01 | (31,21) |
| 501 | 12:00:02 | (32,21) |
| 501 | 12:00:03 | (31,22) |
| 501 | 12:00:04 | (31,22) |
| ... | ... | ... |

# FIG. 13

| MERCHANDISE NUMBER | POSITION |
|---|---|
| 023 | (8,3) |
| 023 | (2,6) |
| 023 | (7,1) |
| 023 | (13,4) |
| 023 | (5,4) |

# FIG. 14

| MERCHANDISE NUMBER | SHELF INFORMATION | POSITION |
|---|---|---|
| 023 | 001 | 0 |

# FIG. 15

SECOND POSITION SPECIFICATION
PROCESSING
(INFORMATION PROCESSING APPARATUS)

S51

SECOND POSITION
SPECIFICATION TIMING? → NO

↓ YES

SPECIFY SECOND POSITIONS THAT ARE
POSITIONS OF RESPECTIVE PIECES OF
MERCHANDISE FOR WHICH SUM OF NUMBERS OF
FIRST POSITIONS FROM WHICH PIECES OF
MERCHANDISE ARE VISIBLE IS LARGEST — S52

STORE SECOND POSITION INFORMATION — S53

END

# FIG. 16

| MERCHANDISE NUMBER | SHELF INFORMATION | POSITION |
|---|---|---|
| 023 | 001 | 0 |
| 012 | 003 | 0.2 |
| 026 | 001 | 1 |
| 009 | 002 | 0.6 |
| … | … | … |

# FIG. 17

```
┌──────────────────────────────────────┐
│   FIRST POSITION SPECIFICATION       │
│           PROCESSING                  │
│ (INFORMATION PROCESSING APPARATUS)    │
└──────────────────────────────────────┘
```

FIRST POSITION SPECIFICATION TIMING?  — S61  — NO

YES

r = 1  — S62

③

INITIALIZE C CORRESPONDING TO EACH RANGE  — S63

t = 0  — S64

①

SPECIFY RANGE OF r AT t  — S65

ADD 1 TO C CORRESPONDING TO SPECIFIED RANGE  — S66

t = t + 1  — S67

t > T ?  — S68  — NO  ①

YES

②

# FIG. 18

②

SPECIFY POSITION OF RANGE WHOSE C IS EQUAL TO OR LARGER THAN SECOND THRESHOLD AS FIRST POSITION — S71

STORE FIRST POSITION INFORMATION — S72

$r = r + 1$ — S73

S74
$r > R$ ? NO → ③

YES

END

Europäisches
Patentamt

European
Patent Office

Office européen
des brevets

## EUROPEAN SEARCH REPORT

**Application Number**

EP 23 18 6965

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/245584 A1 (POLAGER RAN [IL] ET AL) 4 August 2022 (2022-08-04) * abstract; figures 11, 14A-14C,23 * * paragraphs [0005] – [0016], [0057], [0113] – [0117], [0121] – [0123], [0329] – [0395] * | 1-14 | INV. G06Q10/087 G06Q30/0601 |
| X | JP 2008 217239 A (FUJITSU LTD) 18 September 2008 (2008-09-18) * abstract; claims 1-5; figures 1-26 * * paragraphs [0008] – [0153] * | 1-14 | |
| X | US 2021/012361 A1 (MITANI KEIICHI [JP] ET AL) 14 January 2021 (2021-01-14) * abstract; claims 1-6; figures 1-8 * * paragraphs [0020] – [0057] * | 1-14 | |
| X,D | JP 2005 031963 A (NIPPON TELEGRAPH & TELEPHONE) 3 February 2005 (2005-02-03) * abstract; claims 1-10; figures 1-6 * * paragraphs [0009] – [0056] * | 1-14 | TECHNICAL FIELDS SEARCHED (IPC) G06Q |

The present search report has been drawn up for all claims

| Place of search | Date of completion of the search | Examiner |
|---|---|---|
| The Hague | 24 November 2023 | Streit, Stefan |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 18 6965

This annex lists the patent family members relating to the patent documents cited in the above-mentioned European search report.
The members are as contained in the European Patent Office EDP file on
The European Patent Office is in no way liable for these particulars which are merely given for the purpose of information.

24-11-2023

| Patent document cited in search report | | Publication date | Patent family member(s) | | Publication date |
|---|---|---|---|---|---|
| US 2022245584 | A1 | 04-08-2022 | EP | 4275160 A1 | 15-11-2023 |
| | | | US | 2022222453 A1 | 14-07-2022 |
| | | | US | 2022222454 A1 | 14-07-2022 |
| | | | US | 2022222726 A1 | 14-07-2022 |
| | | | US | 2022223018 A1 | 14-07-2022 |
| | | | US | 2022223019 A1 | 14-07-2022 |
| | | | US | 2022245584 A1 | 04-08-2022 |
| JP 2008217239 | A | 18-09-2008 | JP | 4651632 B2 | 16-03-2011 |
| | | | JP | 2008217239 A | 18-09-2008 |
| US 2021012361 | A1 | 14-01-2021 | CN | 112215388 A | 12-01-2021 |
| | | | JP | 7383411 B2 | 20-11-2023 |
| | | | JP | 2021015508 A | 12-02-2021 |
| | | | US | 2021012361 A1 | 14-01-2021 |
| JP 2005031963 | A | 03-02-2005 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021015508 A

- JP 2005031963 A